# EUROPEAN PATENT SPECIFICATION

(11) **EP 3 407 465 B1**
(45) Date of publication and mention of the grant of the patent: **24.06.2020**
(21) Application number: 18460030.2
(22) Date of filing: 21.05.2018
(51) Int. Cl.: H02J 13/00, H02S 40/36, H02S 50/00, H04W 40/20

(54) **METHOD AND SYSTEM FOR OPERATION MONITORING AND OPTIMIZATION OF A SET OF PHOTOVOLTAIC PANELS**
VERFAHREN UND SYSTEM ZUR ÜBERWACHUNG UND OPTIMIERUNG DES BETRIEBS EINER GRUPPE VON SOLARPANELEN
PROCEDE ET SYSTEME DE SURVEILLANCE ET D'OPTIMISATION D'UN GROUPE DE PANNEAUX SOLAIRES

(30) Priority: 27.05.2017 PL 42174117
(43) Date of publication of application: 28.11.2018
(73) Proprietor: IGRID TECHNOLOGY SPÓLKA Z OGRANICZONA ODPOWIEDZIALNOSCIA, 41-400 Myslowice (PL)
(72) Inventor: SWIECH, Marcin, 31-752 Kraków (PL); HANC, Artur, 30-384 Kraków (PL)
(74) Representative: Magonska, Alina

(56) References cited:
- EP-A1- 2 230 745
- EP-A1- 2 582 061
- WO-A2-2006/078685
- US-A1- 2014 266 781

## Description

The subject of invention is a method and system for operation monitoring and optimization of a set of photovoltaic panels that allows the damage detection and prediction.

Solar energy is an example of renewable energy source with potentially a key importance for future power generation. In this context, technical solutions allowing an effective and inexpensive generation of power with solar batteries become important. The technical problem that needs to be solved during the construction of a large solar farm (power station comprising a large number of solar panels) is degradation of or damage to individual energy-generating elements: a panel within a set of panels or a silicon wafer within a panel. This problem occurs due to serial-parallel connection of elements used in such devices which makes it impossible to trace the performance of a single element, but only the performance of the entire network. This makes it difficult to evaluate the network performance and technical condition, and limits a simple indication of reasons of reduced capacity and locating the defective elements.

Consequently, it is appropriate to measure parameters such as voltage and current, and also, preferably, temperature, of single power-generating components such as panels or silicon wafers. This however requires installation of not only special monitoring units connected to solar panels to send measurement data to the central unit, but also of an additional, extensive and costly cabling for transmission of such signals. The problem to be solved is to develop such data transmission method that would minimize the need for an additional infrastructure. The solution should also allow a quick disconnecting of malfunctioning elements for quick and efficient replacement. In case of fire, the solution should ensure safety for the fire-fighters, allowing the disconnection of photovoltaic panels from the electrical wiring. In addition, the solution should ensure a reliable and ergonomic data transmission and low operating costs.

From the patent application description CN105140952 (A), a monitoring system and a monitoring method for working order of individual energy sources in a distributed system of power sources are known. The monitoring module is linked to each energy source or to each serial-connected energy in order to monitor and collect data on current, voltage, temperature and other environmental factors of the energy source. The data collected from each source indicate a damage to or a degradation of individual energy sources. The comparison of data collected from adjacent sources allows selecting the environmental factors that affect the adjacent sources, such as cloudy days in case of solar panels. The comparison of data collected from the same source in different time period indicates soiling or degradation due to wear, or a period occurrence such as a moving shadow cast by a nearby building. The collected data are transmitted by the high-voltage power line to the central analytical station for analysis.

From the patent application description US 20120299387 A1, a damage detection method in solar panels involving the measurement of at least one solar battery operating parameter, the determination of differences between the measured solar battery output power and the estimated output powers of first and second models of the solar battery operating modes, the determination of probability relating to the possibility that each model relates to actual solar battery operating mode based on the determined differences, and the disconnection of the solar battery output power from the electric load in response to a specific current flow mode which is the second model's operating mode, is known.

From the patent application description US 2012/0229161. a method for detecting malfunctioning silicon wafers in a solar panel or a malfunctioning solar panel in a set of panels is known. The method includes the evaluation of using a single or a number of bypass diodes connected to a single or a number of silicon wafer parts, the measurement of the current flowing through each solar panel section, the measurement of the current flowing through each bypass diode, and the evaluation of the measured current value in order to determine whether the solar panel is damaged. In an other embodiment, the method measures the current flowing through the solar panel and bypass diodes in order to determine whether the solar panel is damaged. In an other embodiment, the method indicates in a set of solar panels the panel operating below rated power by measuring the output current power and output voltage of this set.

A system and a method of monitoring photovoltaic power generation systems are known from WO 2006/078685. The system comprises panel sentries and string combiner sentries capable of performing bidirectional communication with a master device in order to, among others, collect diagnostic data and monitor performance.

A wireless network for transmitting data from an array of solar energy collectors to a control and monitoring system, which displays a feature of redundancy i.e. units monitoring the solar array transmit data to more than a
single receiver to optimise communication reliability, is known from US 2014/0266781.

Wireless data transmission remains an energy consuming activity, so care should be taken to minimise energy consumption in order to minimise losses of photovoltaic power generating units.

The invention consists in a method as defined in Claim 1, and in a system as defined in Claim 4.

The method and system according to invention perform the function of the method and system for monitoring of operation of photovoltaic panels. These solutions, in comparison to state of art, feature a significantly less developed architecture and also lower operating costs, more reliable data transmission, and are also ergonomically improved in terms of data transmission. The use of wireless data transmission eliminates the need for extensive and expensive cabling used in data transmission, while in relation to other possible solutions of this type, the use of monitoring modules that communicate with the coordinating unit by via other modules significantly reduces the strength of a signal necessary to transmit data, resulting in lower energy consumption and consequently lower costs. This also results in less environmental pollution by electromagnetic radiation which is a potential advantage due to health of living creatures and functionality of electric artefacts. The use of configuration synchronizing the operation of monitoring modules minimizes the throughput necessary for the system to function in relation to the system which uses a simultaneous data transmission from all monitoring modules to the coordinating unit, which also improves the network ergonomics. Finally, the "rigid" character of the network in which each monitoring module sends information to a limited number of redundant neighbouring units guarantees the data transmission reliability in relation to the system with a variable architecture and configuration or a self-organizing structure which, from the photovoltaic farm perspective, will not take the optimal structure for the whole farm but only the structures optimal locally. Additional system advantages include capability of a quick local configuration with the use of a mobile device, capability of disconnecting a defective panel from the network without the need to stop the flow of current, by means of a bypass diode.

An embodiment of the subject of invention is presented in the drawings:
- Fig. 1: general structure of the monitoring system, using the panel monitoring modules in the version with one panel connected,
- Fig. 2: general structure of the monitoring system, using the panel monitoring modules in the version with two panels connected
- Fig. 3: embodiment of the system in the monitoring structure for eight panels,
- Fig. 4: example of the photovoltaic farm structure comprising a few panel monitoring subsystems, form one system for the whole farm
- Fig. 5: structure of operation monitoring module for one photovoltaic panel,
- Fig. 6: structure of operation monitoring module for two photovoltaic panels
- Fig. 7: basic data transmission principle in linear structure for panel operation monitoring subsystem,
- Fig. 8: data transmission in the system and control of wireless network vs. time,
- Fig. 9: information supplementing method to ensure the data transmission redundancy,

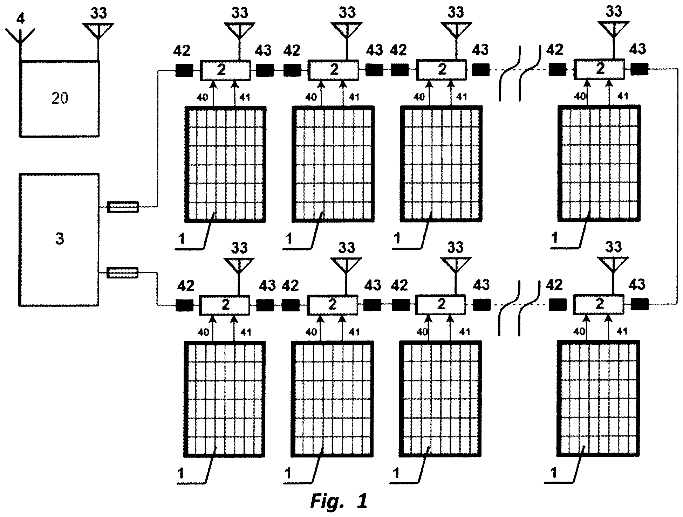

In the drawing according to Fig. 1, the general structure of the photovoltaic panel monitoring system built based on the module that monitors 2 operating parameters of a single photovoltaic panel 1 is shown. The photovoltaic panel 1 is connected to monitoring module 2 by means of contacts 40 and 41. The monitoring modules 2 of each individual photovoltaic panel 1 are connected in series and connected to the energy converter 3 by means of contacts 42 and 43. Each monitoring module 2 is wireless-connected to the network coordinator 20 which uses the antenna 4 for wireless communication with data transmission and visualization system. Antenna 33 of the monitoring module 2 is used for wireless communication.

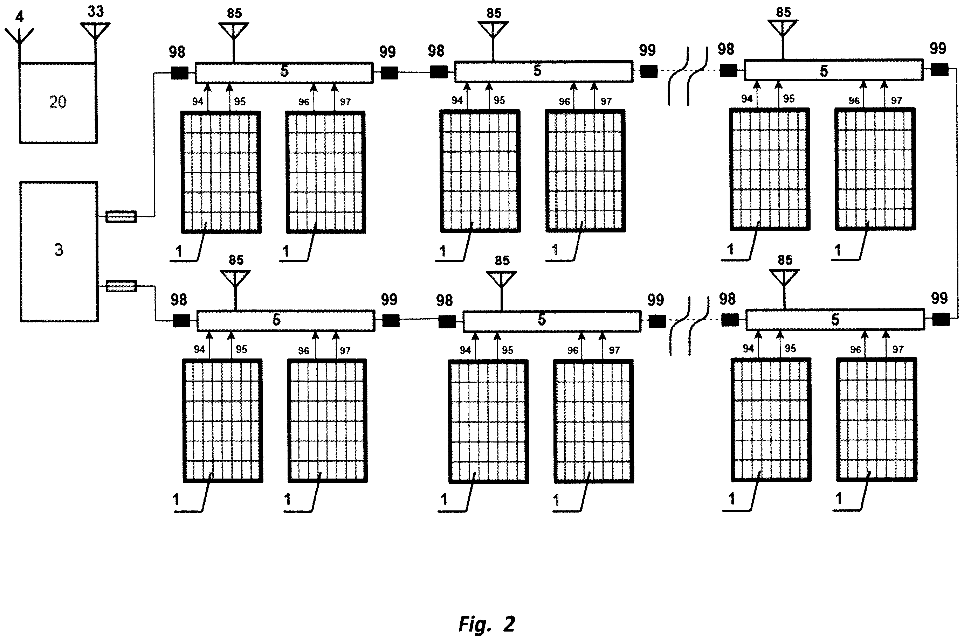

In the drawing according to Fig. 2 showing the general structure of the photovoltaic panel monitoring system built based on the module that monitors operating parameters of two panels 5, the monitoring module for to panels 5 is connected to two photovoltaic panels 1 by means of contacts 94 and 95, and 96 and 97, respectively. The monitoring modules 5 of each set of two photovoltaic panels 1 are connected in series and connected to the energy converter 3 by means of contacts 98 and 99. Each monitoring module 5 is wireless-connected to the network coordinator 20 which uses the antenna 4 for wireless communication with the data transmission and visualization system. Antenna 85 of the monitoring module 5 is used for wireless communication.

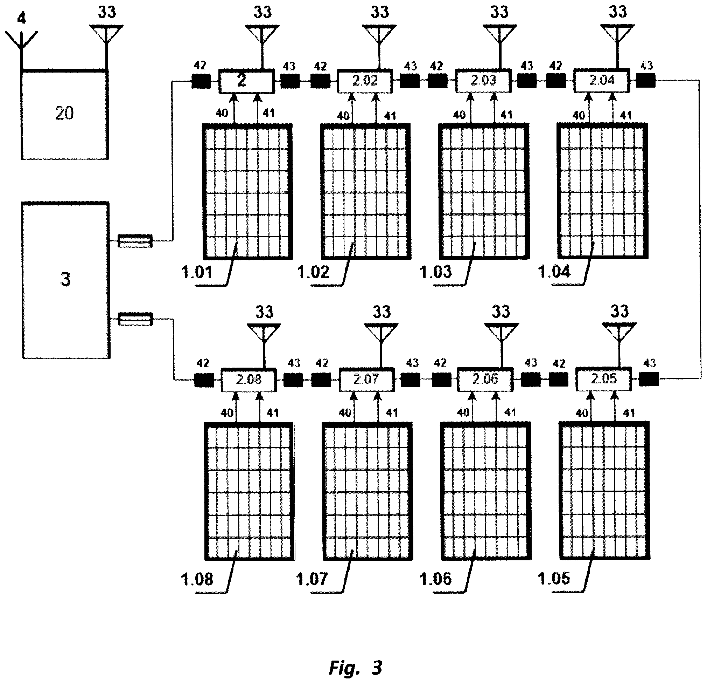

Fig. 3 shows an embodiment of the monitoring system for eight panels, using monitoring modules 2 dedicated to a single monitoring module 1, in order to present the method of message transmission between devices.

The photovoltaic panel 1.01 is connected to the panel operation monitoring module 2.01 which by means of contact 42 is connected to the energy converter 3, and by means of contact 43 to neighbouring monitoring module 2.02. The next photovoltaic panel 1.02 is connected to the monitoring module 2.02, and via contacts 42 and 43 is connected to neighbouring monitoring modules 2.01 and 2.03, and then to next modules.

The photovoltaic panel 1.08 is connected to the monitoring module 2.08, which is connected to the energy converter 3 and the monitoring module 2.07. Monitoring modules 2.01, 2.02, 2.03, 2.04, 2.05, 2.05, 2.07, 2.08 are wireless-connected to the network coordinator 20 which performs the function of a wireless network operation coordinator, using the antenna 33 for communication with the coordinator, and antenna 4 for communication with the data transmission and visualization system.

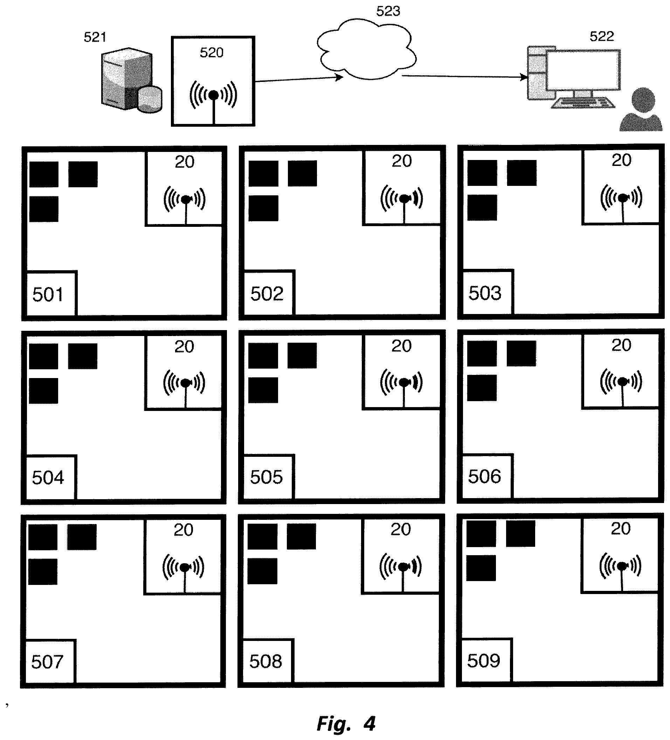

Fig. 4 shows a diagram of photovoltaic farm in which the number of photovoltaic panels exceeds the number of panels connectable in a single wireless communication network. In this embodiment is has been assumed that it is up to 400 panels in one subnetwork.

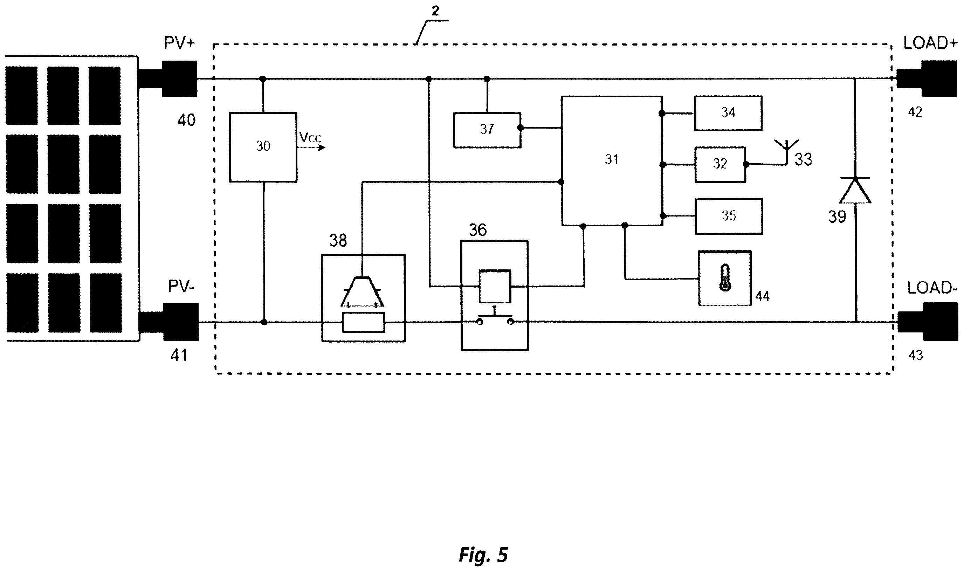

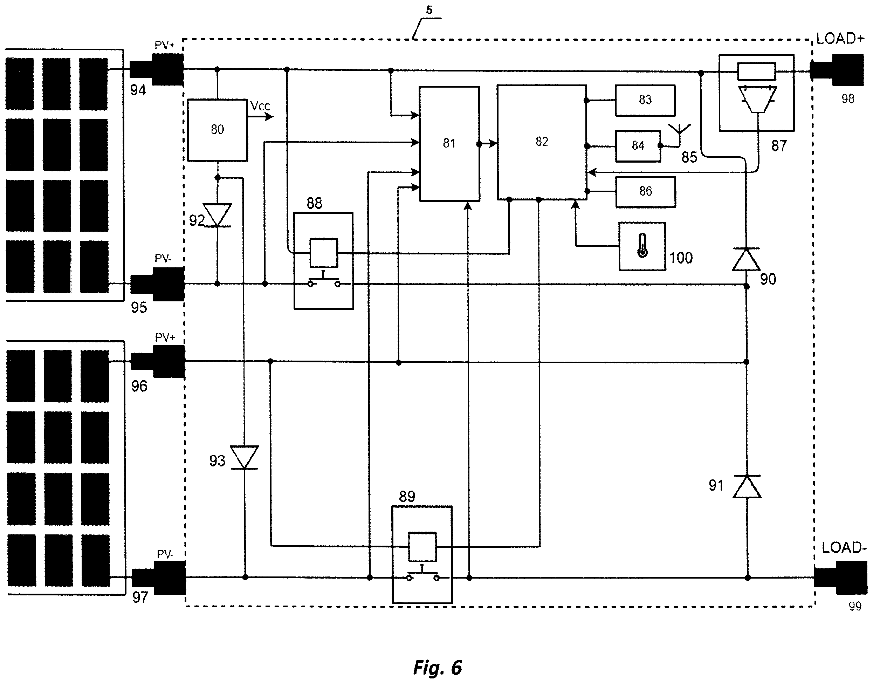

Fig. 4 shown 9 communication subsystems, designated as 501 through 509, each of which has its own network coordinator 20. The layout and definition of network parameters are developed at the system design stage, during which developed is the network configuration for each monitoring modules 2 or 5 is developed according to Fig. 5 and Fig. 6 respectively, taking into account physical location and electrical connection between individual panels. The planning of the structure of system elements also concerns the selection of basic radio channels for the network.
The following settings were used for Fig. 4:
- communication subsystem 501 and communication subsystem 506 operate using channel 1
- communication subsystem 502 and communication subsystem 507 operate using channel 2
- communication subsystems 503, 504 and 509 operate using channel 3
- communication subsystem 505 operates using channel 4
- communication subsystem 508 operates using channel 5

The measurement data are transmitted from monitoring subsystems to the data processing system 521 via the communication module 520, using the link of the master module 20 with communication by means of antenna 4. Then, the data from the processing system processing system 521 are transmitted by means of the communication infrastructure 520 to 523, and then to the end user 522, or directly from the processing system 521 to the end user 522. The data in the system are transmitted in both directions:
- measurement status, and identification data are transmitted from subsystems 501, 502...508 to the processing system 521
- commands and settings are transmitted from the processing system 521 to network coordinators 20, and then sent by the coordinators to monitoring modules 2 or 5 of operation of photovoltaic panels 1.

The monitoring module 2 of operation of one photovoltaic panel 1, whose diagram is shown in Fig. 5, has the power supply system 30 that converts voltage from the photovoltaic panel 1 to the vcc voltage powering internal elements of the monitoring module 2 such as microcontroller 31, voltage measuring circuit 37, and current measuring circuit 38, wireless communication module 32, and short-range, wireless communication module 34. The main system element is the microcontroller 31 which ensures the conversion of measurement signals from the voltage measuring circuit 37 and the current measuring circuit 38, controlling the execution key circuit 36, connected to the wireless communication module 32, connected to the short-range wireless communication module 34, and also optical signalling 35, and the temperature sensor 44. The monitoring module 2 also has an integrated antenna 33 connected to the wireless communication module 32. An important element of the monitoring module 2 is also the bypass diode 39 connected via contacts 42 and 43 to the neighbouring monitoring module 2 of photovoltaic panel 1 and energy converter 3.

Connection of the monitoring module 2 to the photovoltaic panel 1 by means of contacts 40 and 41 allows the power supply from energy generated by the photovoltaic panel 1. The power supply circuit 30 provides voltage to the monitoring module 2, and the execution key circuit 36 has a dedicated power supply system for a correct control of the panel disconnection key. The key control logic is independent of the control of execution key 36 of disconnection of the photovoltaic panel 1 by the microcontroller 31. If the microcontroller 31 is damaged or hangs, the execution key circuit 36 remains functional, i.e. it does not limit the power generation by photovoltaic panel 1. After activation, the microcontroller 31 circuit first reads the configuration from the short-range wireless communication module 34, and
then starts the wireless communication using the wireless communication module 32, waiting for wireless communication to be established with neighbouring monitoring modules 2 and 20. When the radio communication established, the monitoring module 2 synchronizes its internal clock, thus allowing a transition to synchronous operation in the wireless communication and commencement of measurements according to the same timestamps for all monitoring modules. The microcontroller 31 measures current and voltage and records them in its internal memory according to timestamps generated by the network coordinator 20. When the microcontroller 31 collects a required number of measurements, the means of such measurements are stored in the internal memory as ready for transmission and await an appropriate control signal from the network coordinator 20 to supplement data in the measurement frame transported from the monitoring module 2 to the network coordinator 20. Optical signalling 35 is controlled from the microcontroller 31 based on the status of monitoring module 2, status of monitored photovoltaic panel 1, and also wireless-transmitted signals from the network coordinator 20.

In case of connection of contacts 42 and 43 and activation of the execution key circuit 36, the power generated by photovoltaic panel 1 starts to be sent to the energy converter 3. Shadowing of photovoltaic panel 1 or its disconnection, by means of e.g. disconnection of contacts 40 or 41 of the monitoring module 2, activates the conduction of bypass diode 39, allowing a correct operation of remaining photovoltaic panels 1 and an uninterruptible generation of electric energy.

It is also possible to execute the monitoring module 2 to perform only the monitoring of photovoltaic panel 1 without the possibility of disconnecting it. Such a monitoring module 2 does not have the execution key circuit 36.

The monitoring module for two panels 5 shown in Fig. 6 has a power supply circuit 80 which converts voltage from one or two photovoltaic panels 1, depending on the number and working order of photovoltaic panels, to the Vcc voltage for the monitoring module for two panels 5. The power supply to monitoring module 5 requires that at least one of the two panels operates correctly.

The Vcc voltage is supplied to the microcontroller 82, voltage measuring circuits 81, and the current measuring circuit 87, temperature sensor 100, wireless communication module 84, and short-range wireless communication module 83 NFC.
The main system element is the microcontroller 82 which ensures the conversion of measurement signals from the voltage measuring circuit 81 and the current measuring circuit 87, connected to the short-range wireless communication module 83 NFC, to the wireless communication module 84, optical signalling 86, temperature sensor 100, controlling two independent execution key circuits 88 and 89. The execution key circuits are optional. There are versions of monitoring modules without the panel disconnection option; in such case the elements of execution key circuits are not installed on the PCB.

The monitoring module for two panels 5 according to Fig. 6 also has an integrated antenna 85 connected to the wireless communication module 84.

The monitoring module for two panels has two bypass diodes 90 and 91, connected to the outputs of monitored photovoltaic panels 1. Connection of photovoltaic panel 1 to contacts 94 and 95 or 96 and 97 allows power supply from the energy generated by the panel or panels.

The power supply circuit 80 provides voltage to elements of the monitoring module, while the execution key circuits 88 and 89 have a dedicated power supply system for a correct control of the panel disconnection key. The key control logic is independent of the control of execution key circuits 88 and 89 of panel disconnection by the microcontroller 82. If the microcontroller 82 is damaged or hangs, the execution key circuits 88 and 89 remain functional, i.e. they do not limit the power generation by photovoltaic panel which is in worse working order.
It is also possible to execute the monitoring module 5 to perform only the monitoring of photovoltaic panel 1 without the possibility of disconnecting it.

Such a monitoring module 5 does not have the execution key circuit 89. The communication configuration and panel identification data are entered at the configuration and/or system commission stage, using tools that allow data input to monitoring modules 2 or monitoring modules for two panels 5 by means of the short-range wireless communication module 34 NFC or the wireless communication module 32 used by the microcontroller 31 in the service mode.
Communication in the service mode takes place directly between the service module, i.e. the device that allows the transmission of parameter set to the monitoring module using the wireless communication module 32.

The method according to invention will be explained in more detail by presenting the operating principle of the wireless message transmission interface. The legend describing basic terms used in the description is presented below.

| | |
|---|---|
| network cycle | - time between two starts of data transmission in the wireless network, reserved for the communication frame transfer from the master module to a network device and its return to the master module, taking the repetitions into account, |
| time slot | - time interval dedicated for data transmission by one monitoring module, e.g. module 2.01, |
| jitter | - time dispersion resulting from inaccuracy of time measurement by monitoring modules 2.01 through 2.08 and by the network coordinator 20, |
| frame time | - time necessary for data transmission, resulting from transmission speed, amount of sent data, and additional variables sent, e.g. a preamble |

The system configuration includes the entering of basic network parameters, in particular:
- subnetwork identifier,
- measuring module logical address in the network
- transmission power,
- basic communication channel and additional channels used in communication,
- network size, i.e. number of devices which are used in wireless communication

In addition, in the embodiment also the monitored panel data are entered (e.g. serial number, physical location), which allows finding the device and reading the identification parameters.

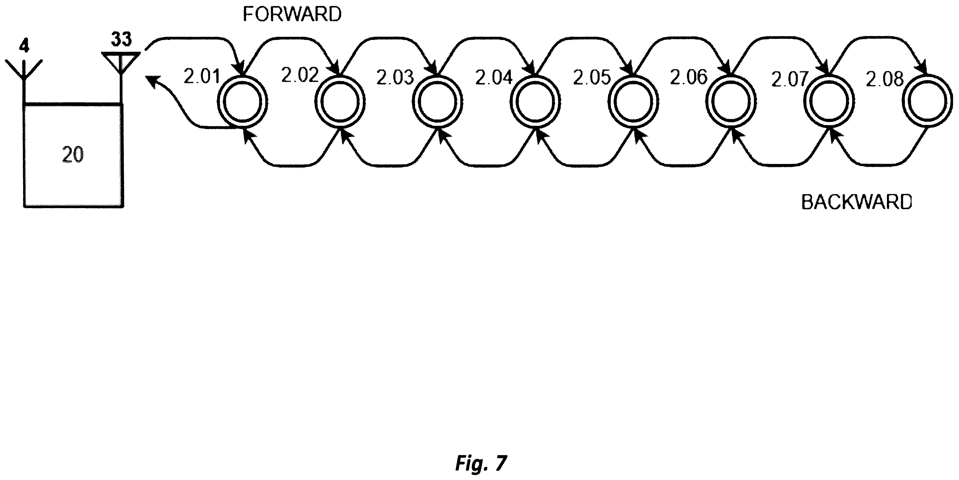

The method of radio network operation is presented in Fig. 7, Fig. 8 and Fig. 9 which show a general data transmission principle, time relationships for data transmission methods and sequence of steps implemented for two-way transmission of messages in the wireless network.
The embodiment relates to the network according to Fig. 3 consisting of monitoring modules 2.01, 2.02, 2.03, 2.04, 2.05, 2.06. 2.07 and 2.08 and the network coordinator 20.

Data transmission is implemented in a linear network according to Fig. 7 in which each network element should participate in transmission of data. Each device has a permanently assigned logical address in the wireless network, entered at the device configuration stage. The data are transmitted between monitoring modules 2 and the network coordinator 20 in the order corresponding to their logical addresses which in turn result from their physical location. Logical addresses of devices are chosen in such a manner that modules with successive logical addresses are located next to each other in order to minimize the distance between monitoring modules 2 and increase the resistance to communication interference between the devices.

The data are transmitted in both network directions:
1. FORWARD direction, i.e. from the network coordinator 20 through monitoring modules 2.01, 2.02 through 2.08,
2. BACKWARD direction from the monitoring module 2.08, through 2.07, 2.06... 2.01 to the network coordinator 20.

The data transmission is implemented with the use of a protocol based on continuous time synchronization between the monitoring modules 2.01, 2.02 through 2.08 and the time of network coordinator 20. The time slot length for data transmission through individual devices results from the length of data packets with reserve for jitter connected with time determination errors for start of transmission and listening by modules that participate in the wireless network communication. Each device receives at least one 1 time slot in the network communication, i.e. a slot in the FORWARD PHASE and a slot in the BACKWARD PHASE.

The network coordinator 20 starts transmission in the first slot of the network cycle - SLOT F1 in the FORWARD phase, each successive monitoring module 2.01 through 2.08 has access to the time slot according to its logical address in the linear network. The monitoring module 2.01 receives SLOT F2, module 2.02 receives SLOT F3, module 2.03 receives SLOT F4, module 2.04 receives SLOT F5, module 2.05 receives SLOT F6, module 2.06 receives SLOT F7, module 2.07 receives SLOT F8.

The communication frame contains synchronization data and data on data identifiers and data amounts which will be sent to the coordinator in the BACKWARD phase.

The listening for frames transmitted from the network coordinator 20 or monitoring modules 2.01, 2.02 through 2.08 takes place in the beginning of the module operation or after occurrence of a communication error, in the mode without synchronization, i.e. each device listens for a communication frame. The frame reception synchronizes the time between the device that received the frame and the timestamp sent in the wireless communication from the network coordinator. Obtaining of timestamps causes a transfer to synchronous operation.

In the synchronous mode it is assumed that not all devices listen for messages from other devices. The number of listening devices is limited depending on the application requirements, thus also limiting the power consumption by communication devices.

The message transmission in network cycle starts by sending a frame in the FORWARD direction in which the coordinator records information to successive devices in the network that include identifiers of variables which are to be sent back to the coordinator in the BACKWARD frame. The wireless transmission of the information on expected data from the coordinator to measuring modules in the FORWARD phase causes that expected data are transmitted in the BACKWARD frame of the same network cycle.

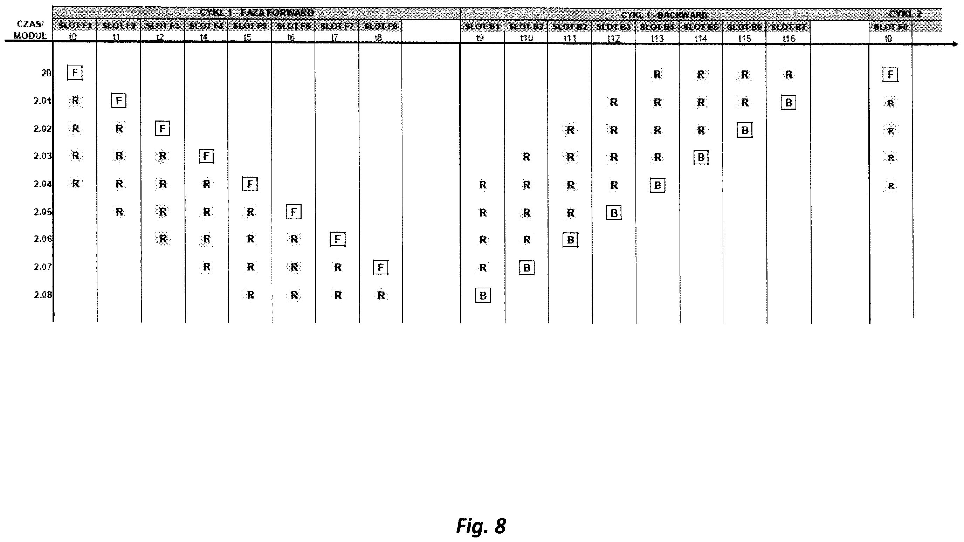

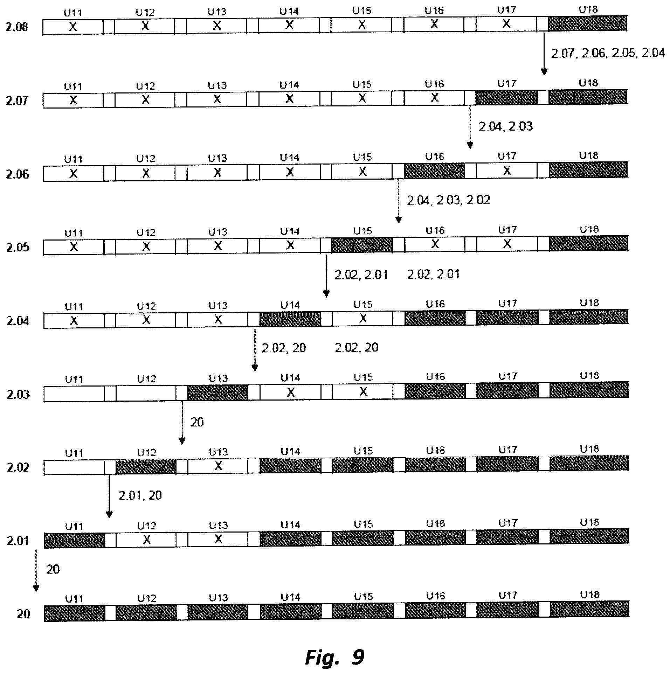

After the expiry of time in which the BACKWARD phase starts, the devices start sending messages in time slots allotted to them, entering measurement values to the communication frame, in relevant fields; the details can be seen in Fig. 8 and Fig. 9.

Transmission of basic data expected in this network (voltage, current, power) requires, three network cycles. All the read voltage values are transmitted in cycle one, current values are transmitted in cycle two, and power values are transmitted in cycle three.

In the embodiment according to Fig. 3 and in the presented operations according to Fig. 7, Fig. 8 and Fig. 9, the number of listening devices is limited to four neighbouring the monitoring module, meaning that for SLOT F1 where the sending device is the network coordinator 20, the listening devices are modules with logical addresses, i.e. monitoring module 2.01, monitoring module 2.02, monitoring module 2.03, and monitoring module 2.04. Reception of data by the monitoring module 2.01 in time SLOT F1 causes their transmission to next monitoring modules 2 in time SLOT F2 in which the listening devices are monitoring module 2.02, monitoring module 2.03, monitoring module 2.04, and monitoring module 2.05. The situation is repeated in successive time slots: SLOT F3, SLOT F4. In time SLOT F5 the data are transmitted by the monitoring module 2.05, and there are only 3
listening devices due to the number of all devices in the network: monitoring module 2.06, monitoring module 2.07, monitoring module 2.08. In time SLOT F6, there are only two listening devices, i.e. monitoring modules 2.07 and 2.08, and in SLOT F7 the only listening device is monitoring module 2.08. It is allowed to assign a few time slots for end elements in the network in order not to lose the information transmission redundancy.

The frame transfer through all network elements in provided time slots cause that the data are supplemented in the data buffer transmitted among successive measuring modules. The frame supplementing method is shown in detail in Fig. 9.

When the monitoring module 2.08 sends the frame with prepared fields for voltage data from modules 2.01 through 2.08 and only the value from the monitoring module 2.08 is supplemented, the frame is correctly read by monitoring modules 2.07, 2.06, 2.05, 2.04.

The frame sent by the monitoring module 2.06 has only its own supplemented data and the supplemented data from the monitoring module 2.08; the data from the monitoring module 2.07 are not supplemented.

The frame from the monitoring module 2.06 was heard only by monitoring modules 2.04, 2.03, 2.02.

The frame sent by the monitoring module 2.05 has only the supplemented data from monitoring modules 2.05 and 2.08; it does not have data from monitoring modules 2.06 and 2.07.

The frame sent by the monitoring module 2.04 has the supplemented data from monitoring module 2.04 and the data which were sent earlier from monitoring modules 2.06, 2.07, 2.08.

Having received the data, the network coordinator 20 has a communication frame with the supplemented all voltage-relating data in these modules. The current-relating data, and also the data and commands from the network coordinator 20 to network modules 2.01 through 2.08 are supplemented in an analogous manner.

### List of designations

### Fig1.

1 - photovoltaic panel
2 - monitoring module
3 - energy converter
4 - antenna for communication with the data processing and visualization system
20 - network coordinator
33 - communication antenna
40, 41,42,43 - contacts

### Fig. 2

3 - energy converter 5 - monitoring modules for to panels
4 - antenna for communication with the data processing and visualization system
20 - network coordinator
33 - communication antenna
94,95,96,97 - contacts
85 - communication antenna

### Fig. 3

1.01-1.08 - photovoltaic panel
2.01 -2.08 - monitoring modules
3 - energy converter
4 - antenna for communication with the data processing and visualization system
20 - network coordinator
33 - communication antenna

### Fig. 4

20 - network coordinator
501-509 -communication subsystem
520- communication module
521- data processing system
522- end user
523- data cloud

### Fig. 5

1 - photovoltaic panel
2 - monitoring module
30 - power supply system
31 - microcontroller
32 - wireless communication module
33 - communication antenna
34 - short-range wireless communication module
35 - optical signalling
36 - execution key circuit
37 - voltage measuring circuit
38 - current measuring circuit
39 - bypass diode
40, 41,42,43 - contacts
44 - temperature sensor

### Fig. 6

1 - photovoltaic panel
5 - monitoring modules for to panels
80 - power supply circuit
81 - voltage measuring circuit
82 - microcontroller
83 - short-range wireless communication module
84 - wireless communication module
85 - antenna
86 - optical signalling
87 - current measuring circuit
88,89 - execution key circuits
90,91 - bypass diodes
92,93 - diodes
94,95,96,97,98,99 - contacts
100 - temperature sensor

## Claims

1. A method of monitoring and optimization of the operation of a set of photovoltaic panels (1) allowing damage detection and prediction, comprising the steps of:
Providing monitoring modules (2) connected to photovoltaic panels (1) and powered by them, as well as a network coordinator (20), wherein the monitoring modules (2) are able to communicate wirelessly with each other and with the network coordinator (20);
Assigning a logical address to each monitoring module (2) in such a manner that modules with successive logical addresses are located next to each other;
Allotting to the network coordinator (20) an initial time slot;
Allotting to each monitoring module (2), except the monitoring module with the last logical address, a time slot for forward transmission according to its logical address;
Allotting to each monitoring module (2) a time slot for backward transmission according to its logical address;
For each of the monitoring devices (2) and the network coordinator (20), limiting a set of devices, among the monitoring devices (2) and/or the network coordinator (20), which listen to said monitoring device (2) or network coordinator (20) to a number of devices neighboring said monitoring device (2) or network coordinator (20);
In the initial time slot, transmitting, by the network coordinator (20), a communication frame containing synchronization data and identifiers of data which are to be sent back to the network coordinator (20), and receiving, by monitoring devices (2) in the set of devices which listen to the network coordinator (20), the communication frame;
In each subsequent time slot for forward transmission, transmitting, by the monitoring device (2) which has been allotted said time slot for forward transmission, the communication frame, and receiving, by monitoring devices (2) in the set of devices which listen to said monitoring device (2), the communication frame;
In each subsequent time slot for backward transmission, entering in the communication frame, by the monitoring device (2) which has been allotted said time slot for backward transmission, the measurement values corresponding to the identifiers of data, and receiving, by monitoring devices (2) and/or the network coordinator (20) in the set of devices which listen to said monitoring device (2), the communication frame.

2. The method of monitoring according to claim 1, wherein the monitoring modules (2) are configured by assigning to them one of a basic radio operation channel, a transmission power, a network number and a number of a proper subnetwork within the said network.

3. The method of monitoring according to claim 1, wherein the network coordinator (20) stores data enabling physical location of a particular monitoring module (2) whose logical address is known .

4. A system for monitoring and optimization of operation of photovoltaic panels (1), comprising:
monitoring devices (2) connected by means of contacts (40, 41) to photovoltaic panels (1) and powered by them (30), equipped with a communication antenna (33);
a network coordinator (20) equipped with an antenna (33);
wherein the monitoring devices (2) are configured to communicate wirelessly with each other and with the network coordinator (20) using the antennas (33);
wherein the monitoring modules (2) comprise a voltage measuring circuit (37) and a current measuring circuit (38), as well as a microcontroller (31) equipped with a memory unit configured to store, until successful transfer, data;
**characterized in that** the network coordinator (20) and the monitoring modules (2) are configured to carry out the method according to Claim 1.

5. The monitoring system according to claim 4, wherein at least one monitoring module (5) is configured for the monitoring of two photovoltaic panels (1).

6. The monitoring system according to claim, wherein the configuration of the monitoring modules (2) includes at least assigning to them one of a basic radio operation channel, a transmission power, a network number and a number of a proper subnetwork within the said network.

7. The monitoring system according to claim 4, wherein the network coordinator (20) is configured to store data enabling physical location of a particular monitoring module (2) whose logical address is known .

## Patentansprüche

1. Ein Verfahren zur Überwachung und Optimierung des Betriebs eines Satzes von Photovoltaikmodulen (1), das die Erkennung und Prognostizierung von Schäden ermöglicht und die folgenden Schritte umfasst:
Bereitstellung von Überwachungsmodulen (2), die an Photovoltaikmodule (1) angeschlossen sind und von diesen mit Strom versorgt werden, sowie einer Netzwerksteuerung (20), wobei die Überwachungsmodule (2) drahtlos miteinander und mit der Netzwerksteuerung (20) kommunizieren können;
Zuweisen einer logischen Adresse zu jedem Überwachungsmodul (2), so dass Module mit aufeinanderfolgenden logischen Adressen nebeneinander angeordnet sind;
Zuweisen eines initialen Zeitfensters an die Netzwerksteuerung (20);
Zuweisen eines Zeitfensters zu jedem Überwachungsmodul (2) mit Ausnahme des Überwachungsmoduls mit der letzten logischen Adresse, zwecks Vorwärtsübertragung entsprechend der logischen Adresse;
Zuweisen eines Zeitfensters für die Rückwärtsübertragung zu jedem Überwachungsmodul (2) entsprechend der logischen Adresse;
Für jedes der Überwachungsgeräte (2) und die Netzwerksteuerung (20) wird ein Gruppe von Geräten unter den Überwachungsgeräten (2) und/oder der Netzwerksteuerung (20) abgegrenzt, die dem jeweiligen Überwachungsgerät (2) oder der Netzwerksteuerung (20) unterstellt sind, zu einer Reihe von Geräten neben dem genannten Überwachungsgerät (2) oder der Netzwerksteuerung (20);
In dem initialen Zeitfenster sendet die Netzwerksteuerung (20) ein Kommunikationsframe, das Synchronisationsdaten und Datenkennungen enthält, die an die Netzwerksteuerung (20) zurückgesendet werden sollen, und empfängt das Kommunikationsframe mittels der Überwachungsgeräte (2) im Rahmen der Reihe von Geräten, die der Netzwerksteuerung (20) unterstellt sind;
In jedem nachfolgenden Zeitfenster für die Vorwärtsübertragung sendet das Überwachungsgerät (2), dem das jeweilige Zeitfenster für die Vorwärtsübertragung zugeteilt wurde, das Kommunikationsframe und empfängt das Kommunikationsframe durch Überwachungsgeräte (2) in der Reihe von Geräten, die dem jeweiligen Überwachungsgerät (2) unterstellt sind;
In jedem nachfolgenden Zeitfenster für die Rückwärtsübertragung gibt das Überwachungsgerät (2), dem dieser Zeitrahmen für die Rückwärtsübertragung zugewiesen wurde, die Messwerte in das Kommunikationsframe ein, die den Datenkennungen entsprechen, und empfängt das Kommunikationsframe durch die Überwachungsgeräte (2) und/oder die Netzwerksteuerung (20) in der Reihe von Geräten, die dem jeweiligen Überwachungsgerät (2) unterstellt sind.

2. Das Überwachungsverfahren nach Anspruch 1, wobei die Überwachungsmodule (2) entsprechend konfiguriert sind, indem ihnen ein grundlegender Funkbetriebskanal, eine Übertragungsleistung, eine Netzwerknummer und die Nummer des entsprechenden Subnetzwerks innerhalb des jeweiligen Netzwerks zugewiesen werden.

3. Das Überwachungsverfahren nach Anspruch 1, wobei die Netzwerk-steuerung (20) Daten speichert, die den physischen Standortbestimmung eines bestimmten Überwachungsmoduls (2) freigeben, dessen logische Adresse bekannt ist.

4. Ein System zur Überwachung und Optimierung des Betriebs von Photovoltaikmodulen (1), bestehend aus:
Überwachungsgeräten (2), die über Kontaktpunkte (40, 41) mit Photovoltaikmodulen (1) verbunden und von diesen (30) mit Strom versorgt werden, ausgestattet mit einer Kommunikationsantenne (33);
einer Netzwerksteuerung (20), die mit einer Antenne (33) ausgestattet ist;
wobei die Überwachungsgeräte (2) so konfiguriert sind, dass sie drahtlos miteinander und mit der Netzwerksteuerung (20) über die Antennen kommunizieren (33);
wobei die Überwachungsmodule (2) einen Spannungsmesskreis (37) und einen Strommesskreis (38) sowie einen Mikrocontroller (31) umfassen, der mit einer Speichereinheit ausgestattet ist, die so konfiguriert ist, dass bis zur erfolgreichen Übertragung Daten gespeichert werden;
**dadurch gekennzeichnet, dass** die Netzwerksteuerung (20) und die Überwachungsmodule (2) entsprechend konfiguriert sind, um das Verfahren nach Anspruch 1 durchzuführen.

5. Das Überwachungsverfahren nach Anspruch 4, wobei mindestens ein Überwachungsmodul (5) für die Überwachung von zwei Photovoltaik-Modulen (1) konfiguriert ist.

6. Das Überwachungsverfahren nach Anspruch 4, wobei die Konfiguration der Überwachungsmodule (2) mindestens die Zuordnung eines grundlegenden Funkbetriebskanals, einer Übertragungsleistung, einer Netzwerknummer und einer Nummer eines entsprechenden Subnetzwerks innerhalb des jeweiligen Netzwerks zugewiesen werden.

7. Das Überwachungsverfahren nach Anspruch 4, wobei die Netzwerksteuerung (20) für die Speicherung von Daten konfiguriert ist, die die physischen Standortbestimmung eines bestimmten Überwachungsmoduls (2) ermöglichen, dessen logische Adresse bekannt ist.

## Revendications

1. Procédé de surveillance et d'optimisation du fonctionnement d'un ensemble de panneaux photovoltaïques (1) permettant la détection et la prédiction de dommages, comprenant les étapes suivantes :
Fournir des modules de surveillance (2) connectés aux panneaux photovoltaïques (1) et alimentés par eux, ainsi qu'un coordinateur de réseau (20) dans lequel les modules de surveillance (2) sont capables de communiquer sans fil entre eux et avec le coordinateur de réseau (20);
Attribuer une adresse logique à chaque module de surveillance (2) de telle manière que les modules avec des adresses logiques successives soient placés côte à côte ;
Attribuer au coordinateur de réseau (20) un créneau horaire initial ;
Attribuer à chaque module de surveillance (2), à l'exception du module de surveillance ayant la dernière adresse logique, un créneau horaire pour la transmission directe en fonction de son adresse logique ;
Attribuer à chaque module de surveillance (2) un créneau horaire pour une transmission arrière en fonction de son adresse logique ;
Pour chacun des dispositifs de surveillance (2) et le coordinateur de réseau (20), limiter un ensemble de dispositifs, parmi les dispositifs de surveillance (2) et/ou le coordinateur de réseau (20) qui écoutent ledit dispositif de surveillance (2) ou coordinateur de réseau (20) à un certain nombre de dispositifs voisins dudit dispositif de surveillance (2) ou coordinateur de réseau (20);
Dans le créneau horaire initial, transmettre, par le coordinateur de réseau (20), une trame de communication contenant des données de synchronisation et des identifiants de données qui doivent être renvoyées au coordinateur de réseau (20), et recevoir, par des dispositifs de surveillance (2) dans l'ensemble des dispositifs qui écoutent le coordinateur de réseau (20), la trame de communication ;
Dans chaque créneau horaire suivant pour la transmission directe, transmettre, par le dispositif de surveillance (2) auquel a été attribué ledit créneau horaire pour la transmission directe, la trame de communication, et recevoir, par les dispositifs de surveillance (2) dans l'ensemble des dispositifs qui écoutent ledit dispositif de surveillance (2), la trame de communication ;
Dans chaque créneau horaire suivant pour la transmission directe, transmettre, par le dispositif de surveillance (2) auquel a été attribué ledit créneau horaire pour la transmission directe, la trame de communication, et recevoir, par les dispositifs de surveillance (2) et/ou le coordinateur réseau (20) dans l'ensemble des dispositifs qui écoutent ledit dispositif de surveillance (2), la trame de communication .

2. Procédé de surveillance selon la revendication 1 **caractérisé en ce que** les modules de surveillance (2) sont configurés en leur affectant l'un de : opération radio de base canal, a puissance d'émission, a numéro de réseau et un nombre de a sous-réseau approprié au sein dudit réseau.

3. Procédé de surveillance selon la revendication 1 **caractérisé en ce que** le coordinateur réseau (20) stocke des données permettant la localisation physique d'un module de surveillance particulier (2) dont l'adresse logique est connue.

4. Système de surveillance et d'optimisation du fonctionnement de panneaux photovoltaïques (1), comprenant :
des dispositifs de surveillance (2) reliés par des contacts (40, 41) à des panneaux photovoltaïques (1) et alimentés par ceux-ci (30), équipés d'une antenne de communication (33) ;
un coordinateur de réseau (20) équipé d'une antenne (33) ;
dans lequel les dispositifs de surveillance (2) sont configurés pour communiquer sans fil entre eux et
avec le coordinateur de réseau (20) en utilisant les antennes (33) ;
dans lequel les modules de surveillance (2) comprennent un circuit de mesure de tension (37) et un circuit de mesure de courant (38), ainsi qu'un microcontrôleur (31) équipé d'une unité de mémoire configurée pour stocker, jusqu'à un transfert réussi, des données ;
**caractérisé en ce que** le coordinateur de réseau (20) et les modules de surveillance (2) sont configurés pour exécuter le procédé selon la revendication 1.

5. Système de surveillance selon la revendication 4 **caractérisé en ce que** au moins un module de surveillance (5) est configuré pour la surveillance de deux panneaux photovoltaïques (1).

6. Système de surveillance selon la revendication 4 **caractérisé en ce que** la configuration des modules de surveillance (2) comprend au moins, en leur attribuant l'un des canaux de fonctionnement radio de base, a la puissance d'émission, a le numéro de réseau et un nombre de a sous-réseau approprié au sein dudit réseau.

7. Système de surveillance selon la revendication 4 **caractérisé en ce que** Le coordinateur réseau (20) est configuré pour stocker les données permettant la localisation physique d'un module de surveillance particulier (2) dont l'adresse logique est connue.
